# EUROPEAN PATENT APPLICATION

(11) **EP 2 987 715 A1**
(43) Date of publication of application: **24.02.2016**
(21) Application number: 14181796.5
(22) Date of filing: 21.08.2014
(51) Int. Cl.: B62M 9/10

(54) **Chain wheel assembly and chain wheel device using it**

(71) Applicant: VP Components Co., Ltd., Taichung City 43865 (TW)
(72) Inventor: Lin, Wen-Hwa, 43865 Taichung City (TW)
(74) Representative: Viering, Jentschura & Partner mbB Patent- und Rechtsanwälte

(57) **Abstract**

The present invention provides a chain wheel assembly (2) and chain wheel device (100) using it, wherein the chain wheel device (100) includes a driver (10), a switching sleeve (20), plural chain wheels (40 to 48) with different diameter sizes, plural connectors (60), and a fastener (30). Therein, the driver (10) is connected to a wheel hub of a back wheel of a bicycle for transmitting a torque. One end of the switching sleeve (20) is screwed to the driver (10). The chain wheels (40 to 48), axially stacked from the largest one to the smallest one, are disposed in a direction from the driver (10) toward the switching sleeve (20), with sprockets (401 to 481) disposed on the periphery of each chain wheel (40 to 48), respectively, for optionally engaging a chain. The ring-shaped connectors (60) are coupled between each two of the chain wheels (40 to 48), respectively. The fastener (30) is screwed to the other end of the switching sleeve (20) for axially fixing the switching sleeve (20).

## Description

### BACKGROUND OF THE INVENTION

### 1. Field of the Invention:

The present invention relates to chain wheels, and more particularly, to a chain wheel assembly and a chain wheel device using it, which is installed on a wheel hub of a back wheel of a bicycle.

### 2. Description of the Related Art:

A conventional wheel hub of a back wheel of a bicycle is provided with plural chain wheels with different diameter sizes, which are optionally engaged by a chain through a derailleur, whereby chain wheels with multiple gear ratios are applied on the bicycle.

DE102012006771.2 discloses a pinion assembly **12,** which is provided with plural chain wheels **14₁** to **14₁₀** with different diameters and numbers of sprockets, wherein the chain wheel **14₁₀** with the largest diameter engages one end of an impeller **16,** and other chain wheels **14₁** to **14₆** with smaller diameters engage the positions where an outer thread **22** being screwed by an inner thread **30** and the position where the impeller **16** is axially positioned at.

However, as shown by the drawings of DE102012006771.2, the chain wheels **14₁** to **14₁₀** are integrally formed. Compared with other chain wheels formed by plural single-piece board materials, cost of manufacturing is high; furthermore, such a component lacks the advantage of being lightweight.

### SUMMARY OF THE INVENTION

For improving the aforementioned disadvantages, the present invention discloses a chain wheel assembly and a chain wheel device using it, wherein a chain wheel assembly is formed by plural chain wheels stacked up. Each of the chain wheels is made of a board material for lowering the cost of manufacturing. Furthermore, a connector is disposed between two neighboring chain wheels for transmitting an exerted torque from one chain wheel to the neighboring chain wheel, whereby the force exerted thereon is scattered.

For achieving such objectives, the present invention provides a chain wheel assembly, which is installed on an installation assembly, while the installation assembly is disposed on a wheel hub of a back wheel of a bicycle, whereby the chain wheel assembly engages a chain, wherein the chain wheel assembly comprises:
plural chain wheels with different diameter sizes, axially stacked from the largest one to the smallest one and disposed on the installation assembly, with plural sprockets disposed on the periphery of each of the chain wheels for optionally engaging the chain; and
plural connectors, formed in a ring shape and coupled between each two of the chain wheels, respectively.

For achieving the objectives above, the present invention also provides a chain wheel device which is installed on a back wheel of a bicycle, comprising:
a driver, connected to a wheel hub of a back wheel of a bicycle for transmitting a torque;
a switching sleeve, with one end screwed to the driver;
plural chain wheels with different diameter sizes, axially stacked from the largest one to the smallest one in a direction from the driver to the switching sleeve, and having plural sprockets disposed on the periphery of each of the chain wheels for optionally engaging a chain;
plural connectors, formed in a ring shape and coupled between each two of the chain wheels, respectively; and
a fastener, screwed to the other end of the switching sleeve for axially fixing the switching sleeve.

Preferably, each of the connectors of the present invention is made of a metal strip coiled up.

Preferably, the connectors of the present invention, arranged from the largest one to the smallest one, are disposed between two neighboring chain wheels, respectively.

Preferably, each of the chain wheels of the present invention is provided with plural coupling bores, while two sides of each of the connectors are engaged with the coupling bores, respectively, wherein each of the coupling bores is a through hole, and more preferably a round bore.

Preferably, two sides of each of the connectors are convexly and equidistantly provided with plural engaging blocks, respectively, for engaging the coupling bores.

Preferably, two sides of each of the engaging blocks are symmetrically formed, while each engaging block is in a rectangular shape, and the long edges of the engaging block are disposed in accordance with the rotational direction of the chain wheels.

Preferably, the chain wheels from the second largest chain wheel to the second smallest chain wheel are engaged with neighboring chain wheels on the two sides through two connectors.

The chain wheel assembly, instead of being integrally formed, is formed by plural chain wheels which are made of single-piece board materials, respectively, thus lowering the cost of manufacturing. Furthermore, each of the connectors is formed in a ring shape and coupled between two neighboring chain wheels; as a result, the torque exerted on each chain wheel is scattered by the chain wheels coupled together, thereby enhancing the torque tolerance of the chain wheel assembly.

### BRIEF DESCRIPTION OF THE DRAWINGS

**Fig. 1** is an exploded view of a chain wheel device in accordance with the present invention.
**Fig. 2** **is** a sectional view of the chain wheel device in accordance with the present invention.
**Fig. 3** is an enlarged view of the chain wheel device in **Fig.** 2.
**Fig. 4** is a side view of the chain wheel assembly in accordance with the present invention, excluding the chain wheel with the smallest diameter.
**Fig. 5** is a perspective view of a driver in accordance with the present invention.
**Fig. 6** is a sectional view of a switching sleeve in accordance with the present invention.
**Fig. 7** is a side view of a fastener in accordance with the present invention.
**Fig. 8A** is a perspective view of a connector in accordance with the present invention.
**Fig. 8B** is a perspective view of the connector which is not yet coiled in accordance with the present invention.

### DETAILED DESCRIPTION OF THE INVENTION

The aforementioned and further advantages and features of the present invention will be understood by reference to the description of the preferred embodiment in conjunction with the accompanying drawings.

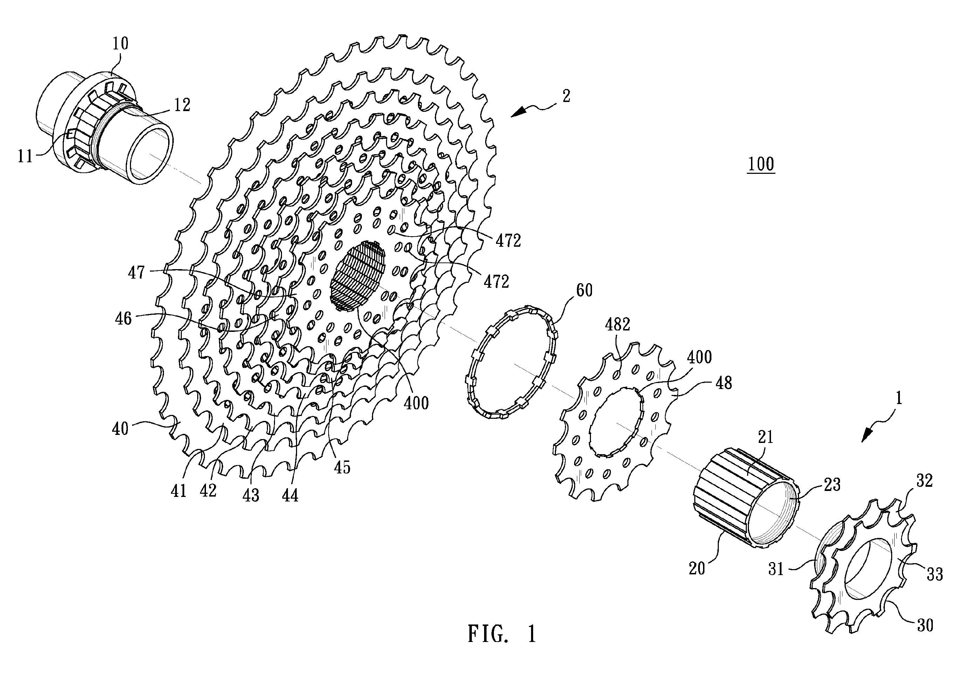

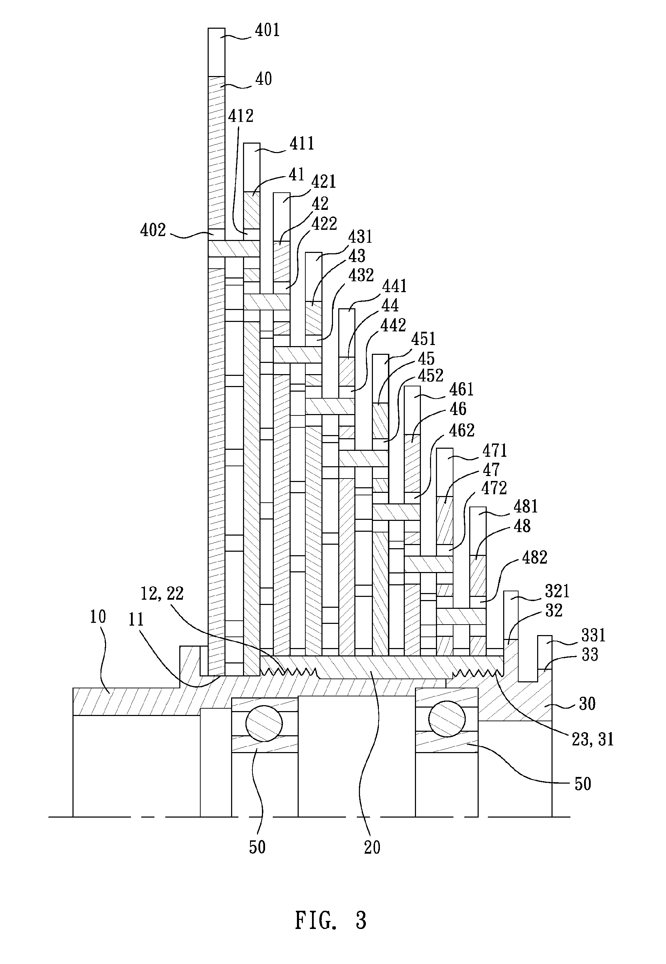

Referring to **Fig. 1** to **Fig. 3****,** a chain wheel device **100** provided by the present invention is an 11-speed derailleur system capable of providing a better kinetic energy transmission, comprising an installation assembly **1** and a chain wheel assembly **2.** The chain wheel assembly **2** is disposed on the installation assembly **1,** while the installation assembly **1** is installed on a wheel hub of a back wheel of a bicycle, thereby enabling the chain wheel assembly **2** to optionally engage a chain. Therein, the installation assembly **1** comprises a driver **10,** a switching sleeve **20,** and a fastener **30,** while the chain wheel assembly **2** is formed by plural chain wheels **40, 41, 42, 43, 44, 45, 46, 47, 48** with different diameter sizes and plural connectors **60.**

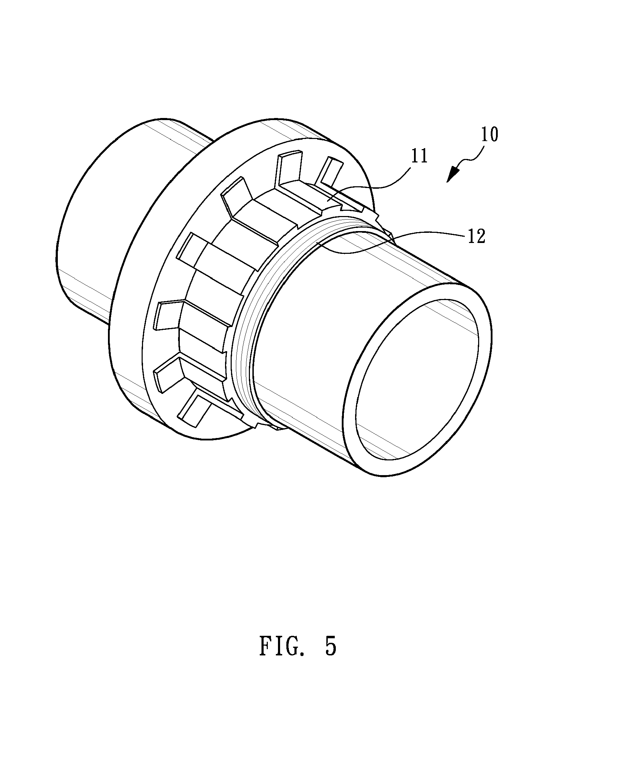

The driver **10,** in a barrel shape as shown in **Fig. 5****,** is a known component. A first spline **11** is disposed on the periphery of the driver **10,** and a first outer thread **12** is disposed on one side of the first spline **11.** The driver **10** is connected to a wheel hub of a back wheel of a bicycle for transmitting a torque. Therein, two bearings **50** are disposed inside the driver **10** for supporting and positioning the driver **10** on the wheel axle of the back wheel of the bicycle.

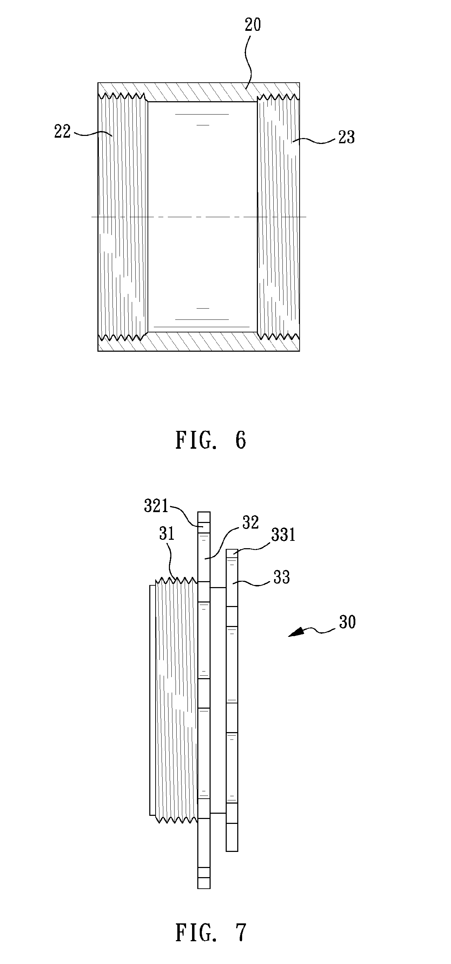

A second spline **21** is disposed on the periphery of the switching sleeve **20.** In addition, two ends of the switching sleeve **20** are provided with a first inner thread **22** and a second inner thread **23,** respectively. Furthermore, as shown in **Fig. 6****,** the first inner thread **22** of the switching sleeve **20** is screwed to the first outer thread **12.**

As shown in **Fig. 7****,** the fastener **30** is provided with a second outer thread **31** for being screwed to the second inner thread **23** of the switching sleeve **20,** thereby axially fixing the switching sleeve **20.** Also, two small diameter chain wheels **32, 33** are disposed on the periphery of the fastener **30,** wherein the diameter of the small diameter chain wheel **33** is smaller than the diameter of the small diameter chain wheel **32,** while plural sprockets **321, 331** are disposed on the periphery of the small diameter chain wheels **32, 33,** respectively.

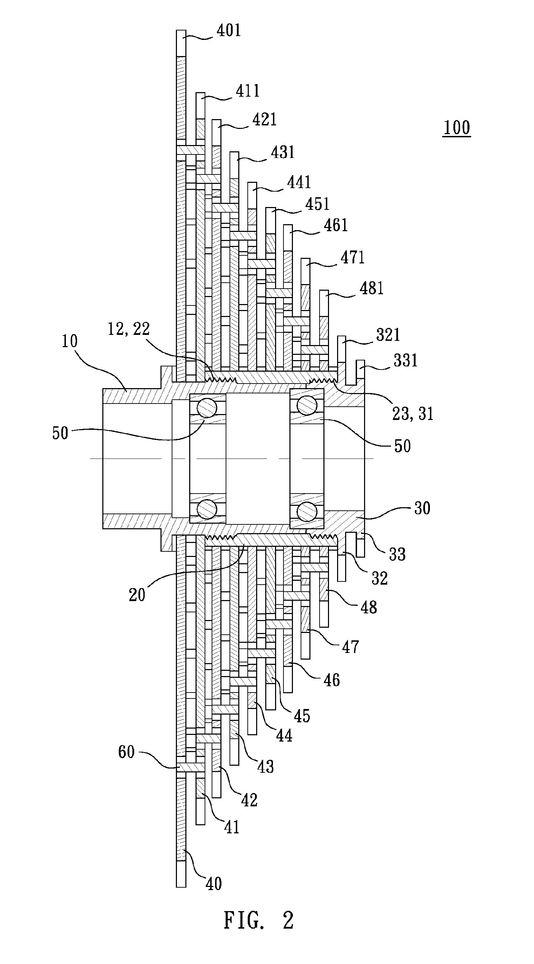

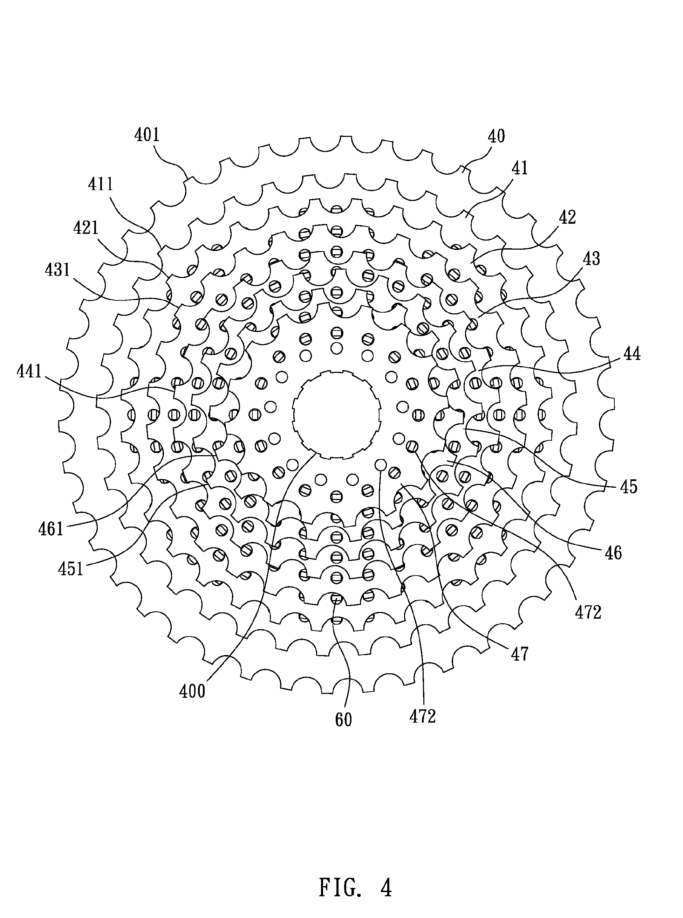

As shown in **Fig. 2** to **Fig. 4****,** the chain wheels **40** to **48** are axially stacked from the largest one to the smallest one and disposed on the installation assembly **1.** Preferably, the chain wheels **40** to **48** are axially stacked from the largest one to the smallest one and disposed in a direction from the driver **10** to the switching sleeve **20,** wherein the diameter of the chain wheel **40** is the largest, and the diameter of the chain wheel **48** is the smallest, while the chain wheel **48** is on the side adjacent to the small diameter chain wheels **32,** 33 of the fastener **30.** Also, the diameter of the small diameter chain wheels **32, 33** is smaller than the diameter of the chain wheel **48.** In the embedment provided by the present invention, the chain wheels **40** to **48** are made of plural single-piece board materials, respectively. An engaging bore **400** with a convex and concave edged periphery is disposed at the center of the chain wheels **40** to **48,** respectively, whereby the chain wheels **40, 41** with the largest and the second largest diameter sizes are engaged with the first spline **11** of the driver **10,** while the chain wheels **42** to **48** are orderly engaged with the second spline **21** of the switching sleeve **20.**

The peripheries of the chain wheels **40** to **48** are provided with plural sprockets **401** to **408,** respectively, for optionally engaging the chain. Also, the chain wheels **40** to **48** are provided with plural coupling bores **402** to **482,** respectively, which are arranged in a circle shape. The coupling bores **402** to **482,** in the embodiment of the present invention, are plural round bores and further present as plural through holes. Especially, except for the chain wheel **40** and the chain wheel **48** having the largest and the smallest diameter sizes, chain wheels **41** to **47** are provided with two circles of the coupling bores **412** to **472.**

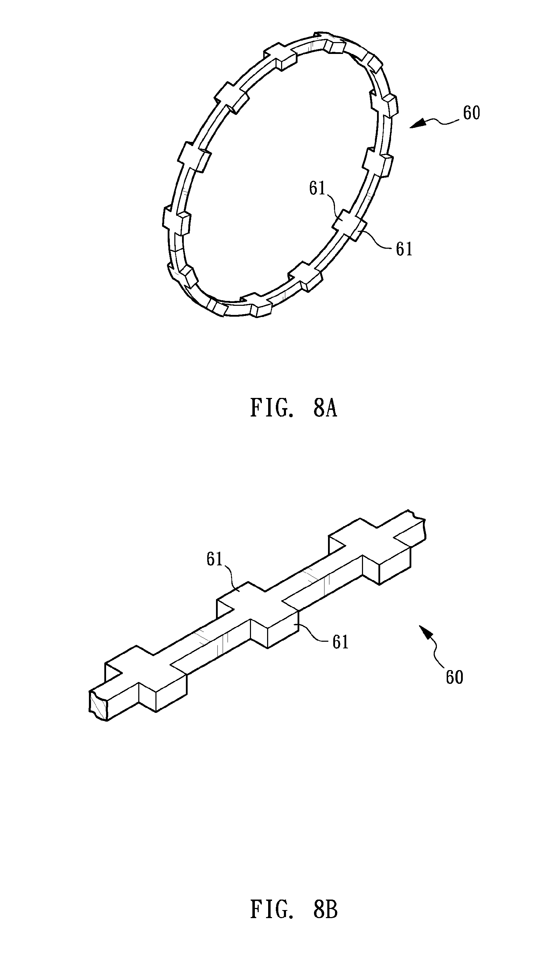

As shown in **Fig. 8A** and **Fig. 8B****,** each of the connectors **60** is made of a continuous metal strip, which is, in the embodiment of the present invention, cut by use of wire electrical discharging machine. Two ends of the connector **60** are welded to be connected. The connectors **60** in a ring shape and having different diameter sizes, arranged from the largest ring to the smallest ring, are disposed between two neighboring chain wheels selected from the chain wheels **40** to **48,** respectively. Therein, each of the connectors **60** is equidistantly provided with plural engaging blocks **61** for engaging the coupling bores **402** to **482,** while two sides of each of the engaging blocks **61** are symmetrically formed, with the long edges thereof disposed in accordance with the rotational direction of the chain wheels **40** to **48.** Therefore, the engaging blocks **61** have greater structural strength for bearing a torque. In addition, regarding the chain wheels **42** to **47,** the respectively larger circle of the coupling bores **412** to **472** on each of the chain wheels **42** to **47** are adjacently disposed in axial alignment with the smaller circle of the coupling bores **412** to **462** of the neighboring chain wheels **41** to **46** with larger diameter sizes, respectively; beside, the larger circle of the coupling bores **412** on the chain wheel **41** is adjacently disposed in axial alignment with the only one circle of the coupling bores **402** on the chain wheel **40,** and the smaller circle of the coupling bores **472** on the chain wheel **47** is adjacently disposed in axial alignment with the only one circle of the coupling bores **482** on the chain wheel **48.** Therefore, plural connectors **60** are applied for engaging the neighboring coupling bores **402** to **482.** Accordingly, orderly from the chain wheel 41, which has the second largest diameter size, to the chain wheel **47,** which has the second smallest diameter size, two connectors **60** are disposed on the chain wheels **41** to **47,** respectively, to engage and position the neighboring chain wheels **40** to **48.**

To sum up, the chain wheel assembly **2,** rather than integrally formed, is formed by plural chain wheels **40** to **48,** which are made of a single-piece board material, respectively, whereby the cost of manufacturing is lowered. Furthermore, a connector **60,** formed in a ring shape, is disposed between each two neighboring chain wheels selected from the chain wheels **40** to **48,** respectively, in order to engage the two neighboring chain wheels **40** to **48,** whereby a torque exerted on each of the chain wheels **40** to **48** is scattered by the coupled neighboring chain wheel, thus enhancing the torque tolerance of the chain wheel assembly

Although particular embodiments of the invention have been described in detail for purposes of illustration, various modifications and enhancements may be made without departing from the spirit and scope of the invention. Accordingly, the invention is not to be limited except as by the appended claims.

## Claims

1. A chain wheel assembly (2) installed on an installation assembly (1) disposed on a wheel hub of a back wheel of a bicycle, whereby the chain wheel assembly (2) engages a chain, wherein the chain wheel assembly (2) comprises:
plural chain wheels (40 to 48) with different diameter sizes, axially stacked from the largest one to the smallest one and disposed on the installation assembly (1), with plural sprockets (401 to 481) disposed on the periphery of each of the chain wheels for optionally engaging the chain; and
plural connectors (60), formed in a ring shape and coupled between each two of the chain wheels (40 to 48), respectively.

2. The chain wheel assembly (2) of claim 1, wherein each of the connectors (60) is made of a metal strip coiled up.

3. The chain wheel assembly (2) of claim 1, wherein the connectors (60) are arranged from the largest ring to the smallest ring and disposed between two of the neighboring chain wheels (40 to 48), respectively.

4. The chain wheel assembly (2) of claim 1, wherein each of the chain wheels (40 to 48) is provided with plural coupling bores (402 to 482), while two sides of each of the connectors (60) are engaged with the coupling bores (402 to 482), respectively.

5. The chain wheel assembly (2) of claim 4, wherein each of the coupling bores (402 to 482) is a through hole.

6. The chain wheel assembly (2) of claim 4, wherein two sides of each of the connectors (60) are equidistantly provided with plural engaging blocks (61), respectively, for engaging the coupling bores (402 to 482).

7. The chain wheel assembly of claim 6, wherein two sides of the engaging block (61) are symmetrically formed.

8. The chain wheel assembly (2) of claim 6, wherein each of the engaging blocks (61) is in a rectangular shape, and each of the coupling bores (402 to 482) is a round bore.

9. The chain wheel assembly (2) of claim 8, wherein long edges of the engaging block (61) are disposed in accordance with the rotational direction of the chain wheels (40 to 48).

10. The chain wheel assembly (2) of claim 1, wherein the chain wheels (41 to 47), which are arranged orderly from the chain wheel (41) with the second largest diameter size to the chain wheel (47) with the second smallest diameter size, are engaged with two of the neighboring chain wheels (40 to 48) on two sides of each of the chain wheels (41 to 47) through two connectors (60).

11. A chain wheel device (100) which is installed on a back wheel of a bicycle, comprising:
a driver (10), connected to a wheel hub of a back wheel of a bicycle for transmitting a torque;
a switching sleeve (20), with one end screwed to the driver (10);
plural chain wheels (40 to 48)with different diameter sizes, axially stacked from the largest one to the smallest one in a direction from the driver (10) to the switching sleeve (20), and having plural sprockets (401 to 481) disposed on the periphery of each of the chain wheels (40 to 48) for optionally engaging a chain;
plural connectors (60), formed in a ring shape and coupled between each two of the chain wheels (40 to 48), respectively; and
a fastener (30), screwed to the other end of the switching sleeve (20) for axially fixing the switching sleeve (20).

12. The chain wheel device (100) of claim 11, wherein a first spline (11) is disposed on the periphery of the driver for engaging the chain wheel (40) with the largest diameter size and the chain wheel (41) with the second largest diameter size.

13. The chain wheel device (100) of claim 12, wherein one side of the first spline (11) is provided with a first outer thread (12), while two ends of the switching sleeve (20) are provided with a first inner thread (22) and a second inner thread (23), respectively, with the first inner thread (22) screwed to the first outer thread (12).

14. The chain wheel device (100) of claim 12, wherein a second spline (21) is disposed on the periphery of the switching sleeve (20) for engaging the chain wheels (42 to 48) except the chain wheel (40) with the largest diameter size and the chain wheel (41) with the second largest diameter size.

15. The chain wheel device (100) of claim 13, wherein the fastener (30) is provided with a second outer thread (31) screwed to the second inner thread (23) of the switching sleeve (20).

16. The chain wheel device (100) of claim 11, wherein two small diameter chain wheels (32, 33) are disposed on the periphery of the fastener (30), while the diameters of the two small diameter chain wheels (32, 33) are smaller than the smallest outer diameters of the other chain wheels (40 to 48).

17. The chain wheel device (100) of claim 11, wherein each of the connectors (60) is made of a strip coiled up.

18. The chain wheel device (100) of claim 11, wherein the connectors (60) are arranged from the largest one to the smallest one and disposed between each two of the neighboring chain wheels (40 to 48), respectively.

19. The chain wheel device (100) of claim 11, wherein each of the chain wheels (40 to 48) is provided with plural coupling bores (402 to 482), while two sides of each of the connectors (60) are engaged with the coupling bores (402 to 482), respectively.

20. The chain wheel device (100) of claim 19, wherein each of the couplings bores (402 to 482) is a through hole.

21. The chain wheel device (100) of claim 19, wherein two sides of each of the connectors (60) are equidistantly provided with plural engaging blocks (61), respectively, for engaging the coupling bores (402 to 482).

22. The chain wheel device (100) of claim 21, wherein two sides of the engaging block (61) are symmetrically formed.

23. The chain wheel device (100) of claim 21, wherein the engaging block (61) is in a rectangular shape, and each of the coupling bores (402 to 482) is a round bore.

24. The chain wheel device (100) of claim 23, wherein long edges of the engaging block (61) are disposed in accordance with the rotational direction of the chain wheels (40 to 48).

25. The chain wheel assembly (2) of claim 11, wherein the chain wheels (41 to 47), which are arranged orderly from the chain wheel (41) with the second largest diameter size to the chain wheel (47) with the second smallest diameter size, are engaged with two of the neighboring chain wheels (40 to 48) on two sides of each of the chain wheels (41 to 47) through two connectors (60).

## Amended claims

### Amended claims in accordance with Rule 137(2) EPC.

1. A chain wheel assembly (2) installed on an installation assembly (1) disposed on a wheel hub of a back wheel of a bicycle, whereby the chain wheel assembly (2) engages a chain, wherein the chain wheel assembly (2) comprises:
plural chain wheels (40 to 48) with different diameter sizes, axially stacked from the largest one to the smallest one and disposed on the installation assembly (1), having plural coupling bores (402 to 482) thereon, respectively, with teeth (401 to 481) disposed on the periphery of each of the chain wheels for optionally engaging the chain; and
plural connectors (60), made of a metal strip coiled up into a ring shape in corresponding sizes with respect to the diameter sizes of the chain wheels (40 to 48), equidistantly provided with plural engaging blocks (61) on two sides thereof, formed in a ring shape and coupled between each two of the chain wheels (40 to 48), respectively, with two sides of each of the connectors (60) engaged with the coupling bores (402 to 482) on the corresponding chain wheels (40 to 48).

2. The chain wheel assembly (2) of claim 1, wherein the connectors (60) are arranged from the largest one to the smallest one and disposed between two of the neighboring chain wheels (40 to 48), respectively.

3. The chain wheel assembly (2) of claim 1, wherein each of the coupling bores (402 to 482) is a through hole.

4. The chain wheel assembly of claim 1, wherein two sides of the engaging block (61) are symmetrically formed.

5. The chain wheel assembly (2) of claim 1, wherein each of the engaging blocks (61) is in a rectangular shape, and each of the coupling bores (402 to 482) is a round bore.

6. The chain wheel assembly (2) of claim 5, wherein long edges of the engaging block (61) are disposed in accordance with the rotational direction of the chain wheels (40 to 48).

7. The chain wheel assembly (2) of claim 1, wherein the chain wheels (41 to 47), which are arranged orderly from the chain wheel (41) with the second largest diameter size to the chain wheel (47) with the second smallest diameter size, are engaged with two of the neighboring chain wheels (40 to 48) on two sides of each of the chain wheels (41 to 47) through two connectors (60).

8. A chain wheel device (100) which is installed on a back wheel of a bicycle, comprising:
a driver (10), connected to a wheel hub of a back wheel of a bicycle for transmitting a torque;
a switching sleeve (20), with one end screwed to the driver (10);
plural chain wheels (40 to 48)with different diameter sizes, axially stacked from the largest one to the smallest one in a direction from the driver (10) to the switching sleeve (20), having plural coupling bores (402 to 482) thereon, respectively, with teeth (401 to 481) disposed on the periphery of each of the chain wheels (40 to 48) for optionally engaging a chain;
plural connectors (60), made of a metal strip coiled up into a ring shape in corresponding sizes with respect to the diameter sizes of the chain wheels (40 to 48), equidistantly provided with plural engaging blocks (61) on two sides thereof, formed in a ring shape and coupled between each two of the chain wheels (40 to 48), respectively, with two sides of each of the connectors (60) engaged with the coupling bores (402 to 482) on the corresponding chain wheels (40 to 48); and
a fastener (30), screwed to the other end of the switching sleeve (20).

9. The chain wheel device (100) of claim 8, wherein a first spline (11) is disposed on the periphery of the driver for engaging the chain wheel (40) with the largest diameter size and the chain wheel (41) with the second largest diameter size.

10. The chain wheel device (100) of claim 9, wherein one side of the first spline (11) is provided with a first outer thread (12), while two ends of the switching sleeve (20) are provided with a first inner thread (22) and a second inner thread (23), respectively, with the first inner thread (22) screwed to the first outer thread (12).

11. The chain wheel device (100) of claim 9, wherein a second spline (21) is disposed on the periphery of the switching sleeve (20) for engaging the chain wheels (42 to 48) except the chain wheel (40) with the largest diameter size and the chain wheel (41) with the second largest diameter size.

12. The chain wheel device (100) of claim 10, wherein the fastener (30) is provided with a second outer thread (31) screwed to the second inner thread (23) of the switching sleeve (20).

13. The chain wheel device (100) of claim 8, wherein two small diameter chain wheels (32, 33) are disposed on the periphery of the fastener (30), while the diameters of the two small diameter chain wheels (32, 33) are smaller than the smallest outer diameters of the other chain wheels (40 to 48).

14. The chain wheel device (100) of claim 8, wherein the connectors (60) are arranged from the largest one to the smallest one and disposed between each two of the neighboring chain wheels (40 to 48), respectively.

15. The chain wheel device (100) of claim 8, wherein each of the couplings bores (402 to 482) is a through hole.

16. The chain wheel device (100) of claim 8, wherein two sides of the engaging block (61) are symmetrically formed.

17. The chain wheel device (100) of claim 8, wherein the engaging block (61) is in a rectangular shape, and each of the coupling bores (402 to 482) is a round bore.

18. The chain wheel device (100) of claim 17, wherein long edges of the engaging block (61) are disposed in accordance with the rotational direction of the chain wheels (40 to 48).

19. The chain wheel assembly (2) of claim 8, wherein the chain wheels (41 to 47), which are arranged orderly from the chain wheel (41) with the second largest diameter size to the chain wheel (47) with the second smallest diameter size, are engaged with two of the neighboring chain wheels (40 to 48) on two sides of each of the chain wheels (41 to 47) through two connectors (60).
